# EUROPEAN PATENT APPLICATION

(11) **EP 4 357 856 A1**
(43) Date of publication of application: **24.04.2024**
(21) Application number: 23198439.4
(22) Date of filing: 20.09.2023
(51) Int. Cl.: G03H 1/08, G03H 1/22

(54) **HOLOGRAM CALCULATION FOR COMPACT HEAD-UP DISPLAY**

(30) Priority: 20.10.2022 GB 202215505
(71) Applicant: Envisics Ltd., Milton Keynes MK1 1PT (GB)
(72) Inventor: ANTONELLO, Jacopo, Milton Keynes, MK1 1PT (GB); SMEETON, Timothy, Milton Keynes, MK1 1PT (GB); CHRISTMAS, Jamieson, Milton Keynes, MK1 1PT (GB)
(74) Representative: Greenaway, Martin William

(57) **Abstract**

A method of calculating a sub-hologram of a virtual image point for an optical system comprising a display device arranged to display the sub-hologram and a waveguide arranged to replicate the sub-hologram. The method comprises determining an area delimited by straight line paths from the virtual image point to the perimeter of an entrance pupil of a viewer, wherein the area comprises a first area component on a first virtual replica of the display device and a second area component on a second virtual replica of the display device; determining a first sub-hologram component of the virtual image point within the first area component and a second sub-hologram component of the virtual image point within the second area component; superimposing the first sub-hologram component and second sub-hologram component to form a sub-hologram of the virtual image point. The method further comprises applying a local phase-ramp function to at least one of the first area component and second area component.

## Description

### FIELD

The present disclosure relates to pupil expansion or replication, in particular, for a diffracted light field comprising diverging ray bundles. More specifically, the present disclosure relates a method for determining a diffractive structure, such as a hologram or kinoform, for display by a display system comprising a waveguide pupil expander and to a method of pupil expansion using a waveguide. Some embodiments relate to two-dimensional pupil expansion, using first and second waveguide pupil expanders. Some embodiments relate to picture generating unit and a head-up display, for example an automotive head-up display (HUD).

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a `light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other embodiments, the image is a real image formed by holographic reconstruction and the image is projected or relayed to the viewing plane. The image is formed by illuminating a diffractive pattern (e.g., hologram) displayed on the display device.

The display device comprises pixels. The pixels of the display device may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some examples, an image (formed from the displayed diffractive pattern/hologram) is propagated to the eyes. For example, spatially modulated light of an intermediate holographic reconstruction / image formed either in free space or on a screen or other light receiving surface between the display device and the viewer, may be propagated to the viewer.

In embodiments, the image is a real image. In other embodiments, the image is a virtual image that is perceived by a human eye (or eyes). The projection system, or light engine, may thus be configured so that the viewer looks directly at the display device. In such embodiments, light encoded with the hologram is propagated directly to the eye(s) and there is no intermediate holographic reconstruction formed, either in free space or on a screen or other light receiving surface, between the display device and the viewer. In such embodiments, the pupil of the eye may be regarded as being the entrance aperture of the viewing system and the retina of the eye may be regarded as the viewing plane of the viewing system. It is sometimes said that, in this configuration, the lens of the eye performs a hologram-to-image conversion.

In some other examples, the (light of a) diffractive pattern/hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-motion box.)

In some embodiments, the image perceived by a viewer is a virtual image that appears upstream of the display device - that is, the viewer perceives the image as being further away from them than the display device. Conceptually, it is possible to consider a plurality of different virtual image points of a virtual image. The distance from a virtual point to the viewer is referred to herein as a virtual image distance, for that virtual image point. Different virtual points may, of course, have different virtual image distances. Individual light rays, within ray bundles associated with each virtual point, may take different respective optical paths to the viewer, via the display device. However, only some parts of the display device, and therefore only some of the rays from one or more virtual points of a virtual image, may be within the user's field of view. In other words, only some of the light rays from some of the virtual points on the virtual image will propagate, via the display device, into the user's eye(s) and thus will be visible to the viewer. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels). Embodiments of the present disclosure relate to a configuration in which a hologram of an image is propagated to the human eye rather than the image itself. In other words, the light received by the viewer is modulated according to (or encoded with/by) a hologram of the image. However, other embodiments of the present disclosure may relate to configurations in which the image is propagated to the human eye rather than the hologram - for example, by so called indirect view, in which light of a holographic reconstruction or "replay image" formed on a screen (or even in free space) is propagated to the human eye.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels). Embodiments of the present disclosure relate to a configuration in which a hologram of an image is propagated to the human eye rather than the image itself. In other words, the light received by the viewer is modulated according to (or encoded with/by) a hologram of the image. However, other embodiments of the present disclosure may relate to configurations in which the image is propagated to the human eye rather than the hologram - for example, by so called indirect view, in which light of a holographic reconstruction or "replay image" formed on a screen (or even in free space) is propagated to the human eye.

A waveguide is used to expand the field of view and therefore increase the maximum propagation distance over which the full diffractive angle of the display device may be used. Use of a waveguide can also increase the user's eye-box laterally, thus enabling some movement of the eye(s) to occur, whilst still enabling the user to see the image. The waveguide may therefore be referred to as a waveguide pupil expander.

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure relates to non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window - e.g., eye-box or eye motion box for viewing by the viewer. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

In some embodiments, the first pair of opposing surfaces of the waveguide are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram or point cloud hologram. The use of diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field (e.g. diffracted light comprising diverging (not collimated) ray bundles).

In aspects, the display system comprises a display device - such as a pixelated display device, for example a spatial light modulator (SLM) or Liquid Crystal on Silicon (LCoS) SLM - which is arranged to provide or form the diffracted (e.g. diverging) light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted (e.g. diverging) light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated (e.g. rod shaped) and the second waveguide pupil expander may be substantially planar (e.g. rectangular-shaped). The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

In order to provide suitable launch conditions to achieve internal reflection within the first and second waveguide pupil expanders, an elongate dimension of the first waveguide pupil expander may be tilted relative to the first and second dimensions of the second waveguide pupil expander.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The hologram may be represented, such as displayed, on a display device such as a spatial light modulator. When displayed on an appropriate display device, the hologram may spatially modulate light transformable by a viewing system into the image. The channels formed by the diffractive structure (comprising the hologram) are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram is described herein as routing light into a plurality of hologram channels merely to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be arbitrarily divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels. However, in some arrangements, a plurality of spatially separated hologram channels is formed by intentionally leaving areas of the target image, from which the hologram is calculated, blank or empty (i.e., no image content is present).

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the (special type of) hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

Broadly, a system is disclosed herein that provides pupil expansion for an input light field, wherein the input light field is a diffracted or holographic light field comprising diverging ray bundles. As discussed above, pupil expansion (which may also be referred to as "image replication" or "replication" or "pupil replication") enables the size of the area at/from which a viewer can see an image (or, can receive light of a hologram, which the viewer's eye forms an image) to be increased, by creating one or more replicas of an input light ray (or ray bundle). The pupil expansion can be provided in one or more dimensions. For example, two-dimensional pupil expansion can be provided, with each dimension being substantially orthogonal to the respective other.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffractive or diffracted light may be output by a display device such as a pixelated display device such as a spatial light modulator (SLM) arranged to display a diffractive structure such as a hologram. The diffracted light field may be defined by a "light cone". Thus, the size of the diffracted light field (as defined on a two-dimensional plane) increases with propagation distance from the corresponding diffractive structure (i.e. display device).

The spatial light modulator may be arranged to display a hologram (or a diffractive pattern comprising a hologram). The diffracted or diverging light may comprise light encoded with/by the hologram, as opposed to being light of an image or of a holographic reconstruction. In such embodiments, it can therefore be said that the pupil expander replicates the hologram or forms at least one replica of the hologram, to convey that the light delivered to the viewer is spatially modulated in accordance with a hologram of an image, not the image itself. That is, a diffracted light field is propagated to the viewer.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

In general terms, there is provided a method of calculating a hologram of a virtual image point of a virtual image for an optical system. The optical system comprises a display device arranged to display the hologram. The optical system further comprises a waveguide arranged to replicate the hologram. The method may comprise determining an area delimited by straight line paths from the virtual image point to the perimeter of an entrance pupil of a viewer. The area comprises at least part of a virtual replica of the display device formed by the waveguide. The straight line paths may represent light waves. Methods of calculating holograms that comprise propagating light waves from images points, for example point cloud holography, are known *per se.* However, approaches involving applying such methods of calculating a hologram to an optical system comprising a waveguide (in particular, a waveguide pupil expander) are in their infancy. The inclusion of a waveguide in the optical system introduces complexity into the calculation of the hologram, and there are many obstacles to ensuring that a clear and high quality image formed by the calculated hologram is received / viewed at the entrance pupil. The inventors are some of very few people working to solve the problems in said arrangements comprising the application of point cloud holography to an optical system comprising a waveguide pupil expander configured to deliver a hologram (not image) to the eye.

As explained above, an exit pupil of the optical system may be expanded by the waveguide to generate a plurality of virtual replicas of the display device, each virtual replica corresponding to the calculated hologram and formed by the waveguide. An optical system comprising a first waveguide may expand the exit pupil in a first dimension. An optical system comprising a first waveguide and a second waveguide may expand the exit pupil in both a first dimension and a second dimension orthogonal to the first dimension if the first and second waveguides are appropriately arranged. If the optical system comprising one or more waveguides is correctly arranged, a one or two dimensional array of replicas may be generated. Generating a hologram that provides clear and high quality images that are viewed by a viewing system (e.g. the eye of a viewer) via such an array of replicas is difficult. For example, when combining a waveguide with a non-infinite virtual image distance - that is, near-field virtual images - so-called 'ghost images' appear owing to the different possible light propagation paths through the waveguide. A ghost image is a lower intensity replica of a main image. The main (e.g. highest intensity) image may be referred to as the primary image. Each ghost image may be referred to as a secondary image. The presence of ghost images can significantly reduce the quality of a perceived virtual image. The ghost images may give the appearance of blurring of the primary image. Furthermore, for a given position of a viewing system (such as the eye of a user) within the expanded exit pupil, light associated with a particular virtual image point may be received from a plurality of replicas of the display device. But, due to the optical path distance through the one or more waveguides, the different replicas have different optical path lengths and so the depths of the respective virtual replicas (measuring from the exit pupil) are different. A method of a calculating a hologram to be displayed on the display device and then replicated should preferably take this difference in depth of the virtual replicas into account.

A method of calculating a hologram of a virtual image point of a virtual image has previously been specifically developed for an optical system comprising a display device arranged to display the hologram and a waveguide arranged to replicate the hologram. This method removes ghosts and accounts for the differences in the depth of the different virtual replicas. Said method comprises determining a sub-hologram of a virtual image point within an area defined by straight line paths from the virtual image point to the perimeter of an entrance pupil of a viewer. The virtual image point may be one virtual image point of a plurality of virtual image points of the virtual image. The area of the sub-hologram may be determined by propagating a light wave from the respective virtual image point towards a viewer. The area may be defined as an area of intersection of the propagating light wave at a virtual surface between the virtual image and the viewer. The virtual surface may be identified between the virtual image and the waveguide. The virtual surface may comprise the display device and a plurality of replicas of the display device formed by the waveguide. The method may comprise identifying the area on the virtual surface. The virtual surface may also be referred to as the extended modulator. The virtual surface may be a staggered virtual surface of virtual replicas. The area may comprise at least part of a virtual replica of the display device formed by the waveguide. In some embodiments, a first sub-hologram of a first virtual image point is determined within a first area of a first virtual replica of the virtual replica. In other embodiments, a first sub-hologram of a first virtual image point comprises a first sub-hologram component and a second sub-hologram component. In an example, the first sub-hologram component is determined within a first area of a first virtual replica of the display device and the second sub-hologram component is determined within a second area of a second virtual replica of the display device. The method of these embodiments may further comprise superimposing the first sub-hologram component and second sub-hologram component to form the first sub-hologram of the first virtual image point.

The above method only takes into account light rays from the virtual image that can pass through the entrance pupil of a viewing system (such as a viewer's eye) at a particular position within the eye-box. Thus, only light rays that contribute to a "main image" (and not a ghost image) are considered when the hologram is calculated. In consequence, the above method of calculating a hologram prevents the undesirable formation of ghost images. Furthermore, since the method only propagates wavelets/light rays from the virtual image that can pass through the entrance pupil of the viewer's eye at the relevant eye position, the computational complexity is reduced. In this way, the speed of calculating the point cloud hologram is reduced, as is the consumption of computational resources. Additionally, the method accounts for the difference in depth of different replicas in the array of replicas.

So, the above devised hologram calculation method addresses many of the problems associated with providing a clear and high quality image formed from the calculated hologram when a waveguide is included in the optical system. However, after simulation and experimentation to test the robustness of the above method, the inventors have surprisingly found a further problem that affects the clarity and quality of holograms / images received at the eye box. In particular, the inventors have identified a problem when an image point is formed from light that is encoded with a calculated sub-hologram that is determined within an area which spans multiple replicas, for example comprising a first sub-hologram component and second sub-hologram component determined within a first and second area, respectively, of first and second virtual replicas. The inventors have unexpectedly found that, even after accounting for any offsets between replicas and differences in optical path for different replicas, said formed image point appears elongated relative to the virtual image point on which the hologram calculation is based (i.e. the elongation is an error). This reduces the quality of images formed from the hologram and the resolution of the display as fewer pixels per unit area can be shown which is undesirable. The present disclosure provides a method which improves image quality by eliminating or reducing the elongation effect.

In a first aspect, there is provided a method of calculating a sub-hologram of a virtual image point of a virtual image for an optical system. The optical system comprises a display device arranged to display the hologram and a waveguide arranged to replicate the hologram. The method comprises determining an area delimited by straight line paths from the virtual image point to the perimeter of an entrance pupil of a viewer. The area delimited by the straight line paths comprises a first area component on a first virtual replica of the hologram displayed on the display device and a second area component on a second virtual replica of the hologram displayed on the display device. The first virtual replica may be adjacent to the second virtual replica. The method further comprises determining a first sub-hologram component of the virtual image point within the first area component and a second sub-hologram component of the virtual image point within the second area component. The method further comprises superimposing the first sub-hologram component and second sub-hologram component to form a sub-hologram of the virtual image point. This method only takes into account light rays from the virtual image that can pass through the entrance pupil of a viewing system (such as a viewer's eye) at a particular position within an expanded exit pupil. Thus, only light rays that contribute to a "main image" (and not a ghost image) are considered when the hologram is calculated. In consequence the above method of calculating a hologram automatically avoids the undesirable formation of ghost images. Furthermore, since the method only propagates wavelets/light rays from the virtual image that can pass through the entrance pupil of the viewer's eye at the relevant eye position, the computational complexity is reduced. In this way, the speed of calculating the point cloud hologram is reduced, as is the consumption of computational resources. Additionally, the method automatically takes into account the difference in depth of different replicas in the array of replicas.

The method further comprises: applying a local phase-ramp function to at least one of the first area component and second area component. The applied local phase-ramp function advantageously improves image quality by eliminating or reducing elongation of image points formed by light encoded with the calculated hologram. In particular, elongation of said image points relative to the virtual image point for which the hologram is calculated may be eliminated or reduced.

The inventors have deduced that the elongation of the image points is analogous to diffraction effects caused by amplitude aberration effects. This diffraction may result in a displacement or shift in the light of the light cone (or complex light field) propagated from the display device. Light at the boundary of replicas generated by the waveguide may be maximally displaced. This effect may be referred to as an amplitude aberration. The amplitude aberrations disclosed herein are similar to coma, but coma is a phase-only aberration rather an amplitude aberration as the person skilled in the art will understand. The light cone may comprise a plurality of point-spread functions. The diffraction may cause a main lobe of one or more point-spread functions emitted from a region of the display device at or towards the edge of the replica to be deformed or shifted.

The amplitude aberrations discussed above are a particular problem when a sub-hologram of a virtual image point comprises a first sub-hologram component of the virtual image point with a first area component on a first virtual replica and a second sub-hologram component of the virtual image point with a second area component on a second virtual replica. In such cases, the image point reconstructed by the hologram is formed by first and second sub-hologram components (which are superimposed to form the sub-hologram). Ideally, the light from the first and second sub-hologram components would be aligned / combined / superimposed so as to form a single (typically circular) image point appearing identical to the virtual image point from which the sub-hologram is calculated. In other words, the light from the first and second sub-hologram components would ideally appear to overlap and / or may appear to have been formed by a single point-spread function. The light in such cases may be referred to as "co-localised". However, the inventors have identified an error which is analogous to an amplitude aberration caused by diffraction. The amplitude aberration may cause the light of one or both of the first and second sub-hologram components to misaligned. In particular, a point-spread function associated with the first sub-hologram component may be misaligned with respect to a point-spread function associated with second sub-hologram component and / or a point-spread function associated with the second sub-hologram component may be misaligned with respect a point-spread function associated with second sub-hologram component. Reference herein to a misalignment of point-spread functions is made with respect to the respective main lobes of the point-spread functions.

The misalignment in the point-spread function(s) may mean that the point-spread functions from the first and second sub-hologram components do not combine / superimpose / overlap / co-localise correctly. This error caused by the aberration-type effect is detrimental to the image quality of the formed image point. In particular, the formed image point may appear elongated (relative to the intended shape of the virtual image point).

The error found is specific to methods of calculating holograms that comprise propagating light waves from images points, for example point cloud holography, for optical systems comprising a waveguide for pupil expansion. The inventors unexpectedly encountered the issue when testing the robustness of such methods. Through simulation and experimentation, the inventors have found that the appropriate application of a local phase-ramp function to the first and / or second area component can advantageously compensate for the error and so reduce or eliminate the elongation of the corresponding image point. In particular, a local phase ramp may be selected which steers a point-spread function associated with the respective sub-hologram component to reduce the error caused. Thus, light from the first and second sub-hologram components may combine / superimpose / overlap / co-localise following the application of a local phase ramp function. As explained in more detail below, a local phase ramp can be superimposed onto the first and / or second sub-hologram component of the virtual image point.

A phase-ramp (or grating function) applied to an area component (such as the first and / or second area component) may displace the light of the respective sub-hologram component to which the phase-ramp has been applied by a predetermined amount in a first direction at the exit pupil. In particular, a point-spread function formed by the respective sub-hologram component when illuminated may be displaced by a predetermined amount in the first direction. The predetermined amount of displacement may be an amount of displacement at the exit pupil. Phase-ramps (or grating functions) can be calculated to provide a range of displacements with high accuracy. The gradient of the phase-ramp may be analogous to the grating angle of the grating function. The displacement may be linear displacement in the first direction. The first direction may be the x-direction. The local phase-ramp may be combined with the respective sub-hologram component by addition or superposition. So, the step of applying a local phase-ramp function to at least one of the first area component and second area component may comprise adding or superimposing the local phase-ramp function to the respective first sub-hologram component or the second sub-hologram component. In embodiments, phase-delay distributions are displayed on the display device which may be a phase-modulating device such as a liquid crystal on silicon spatial light modulator and the phase-ramp is added to the hologram by wrapped (modulo 2p) phase addition. Two perpendicular local phase-ramps may be individually added to a sub-hologram component and individually modified to fine-tune the position of the light encoded with the respective sub-hologram component.

Reference is made throughout this disclosure to a "phase-ramp" (or "grating function") by way of example only of a function that provides a linear translation of light at the exit pupil. That is, an array of light modulation values which, when added to the hologram, linearly displaces the replay field by a defined magnitude and direction. The displacement may be measured in pixels, millimetres or degrees. The phase-ramp may also be referred to as a phase-wedge. The phase values of the phase-ramp may be wrapped (e.g. modulo 20). A wrapped phase-ramp may be considered a phase grating. However, the present disclosure is not limited to phase-only modulation and the terms "grating function", "software grating" and "blazed grating" may be used as examples of a beam steering function such as a wrapped modulation ramp. A phase-ramp may be characterised by its phase gradient. The term "grating function" is preferred in the present disclosure because the associated grating angle is a key component of the method disclosed.

As used herein, a "local phase-ramp function" means a phase-ramp function which is applied only to a particular area component / sub-hologram component to steer the point-spread function formed by light incident on that sub-hologram component. The spatial extent (i.e. size) of a local phase-ramp function may be the same as that of the respective sub-hologram component. In other words, the phase-ramp function is restricted to the same sub-area of the display device (such as a spatial light modulator) as the corresponding sub-hologram component. So, generally, a local phase-ramp function steers a portion of the light propagated from a display device rather than all of that light. The word "local" is used here to reflect that the phase-ramp component does not extend (in pixel space) beyond the first area component and/or second phase-ramp component. That is, the local phase-ramp function is not applied outside the area of the first/second area component. In other words, the local phase-ramp is not applied to pixels of the display device that are outside the area of the first/second area component. The local phase-ramp function is restricted or delimited to the pixel area/region of the first/second area component. Different local phase-ramp functions may be applied to different sub-hologram components so that a different amount of steering in one or more directions is applied to the different sub-hologram components. In this way, the sub-hologram formed by superimposing the first sub-hologram component and the second sub-hologram component may comprise a plurality of different local phase-ramp functions which are selected to account for the amplitude aberration error.

A displacement associated with the local phase-ramp function may align the point-spread functions formed by the respective sub-hologram components when illuminated. As explained above, a phase-ramp function may displace a point-spread function a predetermined amount at the exit pupil. This displacement may be relative to the position of the point-spread function without the local phase-ramp function applied. Aligning the point-spread functions may comprise causing point-spread functions of, for example, the first and second sub hologram components to overlap, superimpose or co-localise, as described above.
The method may comprise applying a first local phase-ramp function to the first area component and a second local phase-ramp function to the second area component. The first local phase-ramp function and second local phase-ramp function may be different. A first direction corresponding to the first local phase-ramp function may be opposite to a second direction corresponding to the second local phase-ramp function. A gradient of the first local phase-ramp function (grating function) may be different to a gradient of the second local phase-ramp function. As such, the shift or displacement of a first point-spread function formed by the first sub-hologram component and a second point-spread function formed by the second sub-hologram component may be asymmetric or opposite or complimentary. Either or both of the magnitude and polarity of the gradient of the first and second local phase-ramp functions may be different.

There may be a point-spread function associated with each illuminated sub-hologram component. In order to align the point-spread functions, the amount of displacement of a first point-spread function of the first sub-hologram component may depend on the amount of displacement of a second point-spread function of the second sub-hologram component. Thus, local phase-ramp functions may be applied that displace the first and second point-spread different amounts and in different directions. For example, a first point-spread function associated with the first sub-hologram component may be displaced in a second direction by a first amount as a result of amplitude aberration. A second point-spread function associated with the second sub-hologram component may be displaced in a first direction that is opposite to the second direction by a second amount. To correct for the amplitude aberration, a first local phase-ramp function may be applied to the first sub-hologram to shift the first point-spread function in the first direction by the first amount. A second local phase-ramp function may be applied to the second sub-hologram to shift the second point-spread function in the second direction by the second amount. In some examples, the first amount may be the same as the second amount (and in an opposite direction) such that the shift of the first and second point-spread functions is symmetric. In other examples, the first amount may be different to the second amount (and in an opposite direction) such that the shift of the first and second point-spread functions is asymmetric.

The virtual surface or so-called extended modulator may comprise a one or two dimensional array of the display device and virtual replicas. The optical path length of each replica may be different. This may be because the optical path of different replicas may have a different path length through the waveguide, for example bouncing between surfaces of the first and optional second waveguide with a different number of "bounces". Thus, the unfolded path length of each replica may be different and so the array of replicas of the virtual surface or extended modulator may be offset from one another. In other words, the plurality of replicas may be "staggered". Each replica of the display device may be a different perpendicular distance from the display device owing to the different path lengths in the waveguide associated with each replica. For an optical system comprising a first waveguide and a second waveguide, the extended modulator may defined as comprising the following: (i) a first offset between replicas generated in a first waveguide (e.g. an elongate waveguide) defined by an angle (in space) and corresponding direction of pupil expansion, (ii) a second offset between replicas generated in a second waveguide (e.g. planar waveguide) defined by an angle (in space) and corresponding direction of pupil expansion; (iii) any skew between the direction of the first offset and the second offset - creating a general parallelogram if the original display device is rectangular, and / or (iv) an optical path length (difference) between display device replicas and the eye position.

An area of the virtual surface may be associated with each virtual image point of the virtual image. The area may be delineated, for example, by straight line paths (e.g. representing spherical waves or wavelets) propagated from each virtual image point, through the virtual surface to the entrance pupil of a viewer. At least some virtual image points of the virtual image may have an associated area that spans multiple replicas. For example, a first area component of an area associated with a first virtual image point may be on a first virtual replica and a second area component of the area component associated with the first virtual image point may be on a second virtual replica. The first and second virtual replicas may be adjacent one another. The method of calculating a first sub-hologram of the first virtual image point may comprise determining a first sub-hologram component of the virtual image point within the first area component and a second sub-hologram component of the virtual image point within the second area component. The method may further comprise superimposing the first sub-hologram component and second sub-hologram component to form a sub-hologram of the virtual image point.

The step of applying a local phase-ramp function may comprise selecting a phase-ramp function for at least one of the first area component and second area component based on a parameter of the respective area component and / or related sub-hologram component. The parameter may be or related to at least one of: a distance of a center of at least a portion of the respective area component from an edge of the respective replica; the size of the respective area component; the size of the respective sub-hologram component; a ratio of the size of the area component for which the phase-ramp is being selected to the other of the first or second area components and / or a ratio of the size of the sub-hologram component for which the phase-ramp is being selected to the other of first or second sub-hologram components. The amount of shift of a point-spread function formed by a sub-hologram component may depend on the relative size of the sub-hologram component / area component. So, each of the parameters may be used as a proxy for the amount of shift of a point-spread function that is required.

Typically, the phase ramp function selected for the first area component may have an opposite polarity to the phase ramp function selected for the second area component. In some examples, the first area component is different in size and distance from the edge of the respective area to the second area component. As such, the phase-ramp function selected for the first area component may have a different magnitude of gradient than the phase-ramp function selected for the second area component. In other words, the phase-ramp functions applied to the first and second area components may be asymmetric.

The step of selecting a phase-ramp function for at least one of the first area component and second area components may comprise looking up the parameter of the respective sub-hologram component in a look-up table or database. The look-up table or database may comprise data pairs or key-value pairs. The data pairs or key-value pairs may relate values for the parameter with appropriate phase-ramp functions. The look-up table or database may comprise gradient values for the phase-ramp functions. The step of selecting a phase ramp function for at least one of the first area component and second area component may comprise inputting the parameter into the look-up table or database. A local phase-ramp function may then be output. The method may comprise selecting the output local phase-ramp function for the respective first area component or second area component.

The method may comprise calibrating the phase-ramp function output by the look-up table or database. The calibration may comprise apply a calibration factor. The calibration factor may take into parameters of the optical system. For example, the parameters of the optical system may comprise the size of the display device, the angle of incidence of light injected into the waveguide of the optical system, the wavelength of the incident light and the optical path lengths in the system. In this way, the same look-up table or database may be used in conjunction with various different implementations of optical systems. Alternatively, the values stored in the look-up table or database may already be calibrated.

The method may comprise identifying a virtual surface between the virtual image and waveguide. The virtual surface may comprise the display device and a plurality of virtual replicas of the display device formed by the waveguide. The method may further comprise identifying the area on the virtual surface.

The virtual surface comprises the first virtual replica being adjacent to the second virtual replica. The first sub-hologram component of the first virtual replica may be adjacent to the second sub-hologram component of the second virtual replica. In such embodiments, amplitude aberration may cause the first sub-hologram component to be shifted in a direction opposite to the second sub-hologram component.

In embodiments, each sub-hologram is a point cloud hologram determined by propagating a light wave from the corresponding virtual image point towards a viewer and determining the complex light field arriving at a corresponding position of the area, optionally, wherein the light wave is a spherical light wave. As the skilled person will appreciate, may be performed computationally by simulating the propagation of light waves to form wavefronts/complex light fields.

In implementations, each virtual replica of the display device formed by the waveguide is a different perpendicular distance from the display device such that a staggered virtual surface of virtual replicas of the display devices is formed. In examples, each virtual replica of the display device corresponds to a respective replica of the hologram formed by the waveguide. The method may comprise determining the position of each virtual replica of the display device by unfolding the optical path within the waveguide from the display device to the corresponding replica of the hologram formed by the waveguide. Each virtual replica of the display device corresponds to a respective replica of the hologram formed by the waveguide.

The method of calculating a sub-hologram of a virtual image point of the first aspect has been described with respect to a method in which the area delimited by straight line paths from the virtual image point comprises a first area component on a first replica and a second area component on a second replica and in which a first and second sub-hologram component is calculated. However, the method of the first aspect is not limited to this arrangement. The area may comprise further area component on further replicas (for example, a third area component on a third replica and a fourth area component on a fourth replica). Further sub-hologram components may be calculated. For example, a third sub-hologram component within the third area component may be calculated. A fourth sub-hologram component within the fourth area component may be calculated. The step of forming the sub-hologram of the virtual image point may comprise superimposing the first sub-hologram component, the second sub-hologram component and the further (e.g. third and fourth) sub-hologram components. The method may comprise applying a local phase-ramp function to the further sub-hologram components.

According to a second aspect, a method of calculating a hologram is provided. The hologram is of a virtual image and is for an optical system comprising a display device arranged to display the hologram and a waveguide arranged to replicate the hologram. The comprises calculating a respective sub-hologram of each virtual image point of a plurality of virtual image points of the virtual image.

Each sub-hologram is calculated according to the method described in the first aspect. For example, each sub-hologram is calculated by determining an area delimited by straight line paths from the virtual image point to the perimeter of an entrance pupil of a viewer, wherein the area comprises a first area component on a first virtual replica of the display device and a second area component on a second virtual replica of the display device; determining a first sub-hologram component of the virtual image point within the first area component and a second sub-hologram component of the virtual image point within the second area component; superimposing the first sub-hologram component and second sub-hologram component to form a sub-hologram of the virtual image point; and applying a local phase-ramp function to at least one of the first area component and second area component. Any other features described in relation to the method of the first aspect may apply to step of calculating a respective sub-hologram for virtual image point, as defined in the second aspect.

The method may further comprise superimposing the respective sub-holograms of each of the plurality of virtual image point to form a hologram of the virtual image.

In another aspect, a method of calculating a hologram is provided. The hologram is of a virtual image for an optical system comprising a display device arranged to display the hologram and a waveguide arranged to replicate the hologram. The method comprises determining a sub-hologram of each virtual image point of the virtual image. Each sub-hologram is determined by: propagating a light wave from the respective virtual image point towards a viewer; defining an area of intersection of the propagating light wave at a virtual surface between the virtual image and the viewer, wherein the virtual surface comprises the display device and a plurality of virtual replicas of the display device formed by the waveguide, wherein the defined area is bounded by straight line paths from the respective virtual image point to the perimeter of the entrance pupil of the viewer's eye; identifying one or more sub-areas of the defined area of the complex light field, wherein each sub-area intersects the virtual surface at a position corresponding to a different one of the display device and the plurality of virtual replicas. Each of the one or more sub-areas of the complex light field forms a respective component of the sub-hologram.

In another aspect there is provided a method of calculating a sub-hologram of a virtual image point for an optical system comprising a display device arranged to display the sub-hologram and a waveguide arranged to replicate the sub-hologram. The method comprises propagating a light wave from the respective virtual image point towards a viewer. The method further comprises defining an area of intersection of the propagating light wave at a virtual surface between the virtual image and the viewer. The virtual surface comprises the display device and at least a first virtual replica of the display and a second virtual replica of the display device. Each of the virtual replicas is formed by the waveguide. The defined area is bounded by straight line paths from the respective virtual image point to the perimeter of the entrance pupil of the viewer's eye. The method further comprises identifying at least a first area component of the defined area of the light wave on the first virtual replica of the display device and a second area component of the defined area of the light wave on the second virtual replica of the display device; wherein each of the area components of the light wave forms a respective component of the sub-hologram. The method further comprises applying a local phase-ramp function to at least one of the first area component and second area component.

In embodiments, the virtual surface containing the display device and the plurality of virtual replicas is "staggered". In particular, each replica of the display device is a different perpendicular distance from the display device owing to the different path lengths in the waveguide associated with each replica. Thus, the part of the virtual surface (e.g. in the x, y dimensions) associated with each replica is offset from the display device in the perpendicular direction (e.g. in the z dimension).

A method of calculating a point cloud hologram is provided. The point cloud hologram is a hologram of a virtual image for an optical system comprising a display device arranged to display the hologram and waveguide arranged to replicate the hologram. The method comprises forming a point cloud sub-hologram at a position corresponding to that of the display device. The method also comprises forming a point cloud sub-hologram at each position corresponding to a respective virtual replica of the display device formed by the waveguide. Each point cloud sub-hologram is formed using only light rays from the virtual image that can pass through an entrance pupil of a viewer.

In embodiments, the method comprises determining the position of each replica of the display device by unfolding the corresponding optical path within the waveguide from the display device to the replica of the hologram.

The term "virtual image" is used herein to refer to an image or holographic reconstruction formed upstream of the display device. That is, the display device is between the virtual image and a viewer. In other words, the distance from the virtual image to the viewer is greater than the distance from the display device to viewer. It will be understood by the person skilled in the art of optics that the viewer effectively looks through the display device to see the virtual image. The virtual image may be perceived several metres behind the display device. The person skilled in the art will therefore understand how it may be possible to consider light ray paths from the virtual image, through the display device or an extended surface containing the display device, to a viewer on the other side of the display device.

The prefix "sub" in relation to each hologram of the plurality of holograms formed on the display device and replicas thereof is used merely to distinguish from the final/combined hologram of the entire virtual image and reflect that each is a component of the hologram. The hologram may be a point cloud hologram. The sub-hologram and sub-hologram components may therefore also be point cloud sub-holograms or point cloud sub-hologram components, respectively.

As described herein, the waveguide effectively forms an array of replicas of the display device (also called "virtual replicas" herein), wherein each display device replica corresponds to a respective replica of the hologram. The array of replica display devices is referred to herein as a "staggered surface". The "surface" is not continuous because the replicas are spatially separated in direction normal to the surface of the display device e.g. in the z-direction. The surface is referred to as "staggered" to reflect this changing separation of the different display device replicas in the z-direction. Generally, the display device replicas are on different x, y planes that are spatially offset in the z-direction (in the absence of any skew). In the case of replication in one-dimension using one waveguide, the staggered surface may resemble a series of free-standing steps, wherein the risers of the steps are absent. In the case of replication in two orthogonal directions using two orthogonal waveguides as known in the art of pupil expansion, the staggered surface is effectively staggered in two directions e.g. x and y but there is no surface component in the z-direction. The terms "virtual surface", "staggered extended modulator" and "extended surface" may also be used herein to refer to the array of replicas of the display device formed by the waveguide. The present disclosure describes how each sub-hologram is restricted to/defined within an area of the display device spatially-corresponding to an area of staggered or virtual surface defined by straight line paths from the respective virtual image point to the perimeter of the entrance pupil of a viewing system. The area of the staggered or virtual surface effectively defines a "contributory area" of the display device to use for the sub-hologram.

The step of "unfolding" an optical path within the waveguide is described with reference to the process of straight-line extrapolating a light ray that exits the waveguide through its output port (i.e. a light ray of a replica) back to the virtual surface without internal reflection within the waveguide. By extrapolating all light rays of a replica back to the virtual surface, a location or position of a corresponding virtual replica of the display device is identified. Each virtual replica of the display device is at a different distance from the viewer because of the different optical path lengths within the waveguide associated with each replica.
The present disclosure describes a process of "superimposing" sub-holograms and components of a sub-hologram with reference to a process of combining holograms that preserves positional or spatially information on the display device e.g. on the xy plane.

Reference herein to determining sub-holograms or sub-hologram components at various "positions" is made with reference to positions in the direction normal to the surface of the display device - which may also be referred to herein as the propagation or projection axis. As will be familiar to the person skilled in the art of optics, the propagation axis is typically defined as the z-axis. The display device, and virtual replicas thereof, are each typically defined on the xy plane. In some embodiments, point cloud holograms are determined by propagating light waves to the "positions" or planes described.

Reference is made herein to restricting each sub-hologram to (or defining each sub-hologram within) an area or areas defined/bounded/delineated by straight-lines. Each area is an area of the display device defined by or corresponding to an area of the virtual surface. For example, if the straight lines define an area in the middle of a single virtual replica, the sub-hologram is restricted to/defined within that middle area of the display device. Likewise, if the straight lines intersect two or more virtual replicas, each area of a virtual replica (or "sub-area" of the delineated area of the virtual surface] effectively defines a corresponding area (or "sub-area") of the display device. In some embodiments, overlapping areas are defined on different virtual replicas and these areas may be treated differently in accordance with further improvements disclosed herein.

For the avoidance of doubt, the image formed or perceived is a holographic reconstruction of a target image. The holographic reconstruction is formed from a hologram based on the target image. In some embodiments, the hologram is determined (e.g. calculated) from the target image.

The method disclosed herein identifies contributory light paths for forming the virtual image points of a main image. The contributory light paths are light paths from the virtual image that pass through the entrance pupil of the viewer - thereby contributing to image formation. Thus, the method does not consider light paths that contribute to a copy/replica or 'ghost' version of the primary image. Accordingly, all "sub holograms" of the calculated hologram contribute positively to a 'main' target image.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with/by the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer (e.g. from a display device to a viewing system). The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography. Embodiments relate to the calculation of point cloud holograms - that is, holograms built up using point cloud methods.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 20) which represents the amount of phase retardation provided by that pixel. For example, a pixel of the spatial light modulator described as having a phase value of □□□ will retard the phase of received light by □□□ radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image comprising a plurality of image areas (bottom) and corresponding hologram comprising a plurality of hologram components (top);
Figure 3 shows a hologram characterised by the routing or channelling of holographically encoded light into a plurality of discrete hologram channels;
Figure 4 shows a system arranged to route the light content of each hologram channel of Figure 3 through a different optical path to the eye;
Figure 5 shows a perspective view of a pair of stacked image replicators arranged for expanding a beam in two dimensions;
Figure 6 shows an example visualisation of an "extended modulator" or "virtual surface" comprising a 3D array including a display device and a plurality of replicas of the display device formed by a waveguide;
Figure 7 shows an arrangement for calculating a point cloud hologram using an extended modulator, showing the paths of waves propagated from first and second example image points of a desired virtual image to be holographically reconstructed by the hologram;
Figure 8 shows the calculation of a sub hologram for the first example image point of the arrangement of Figure 7;
Figure 9 shows the calculation of a sub hologram for the second example image point of the arrangement of Figure 7;
Figures 10A to 10C relate to an actual image point formed when light is encoded with a sub-hologram comprising a single sub-hologram component, such as the second example image point;
Figures 11A to 11C relate to an actual image point formed when light is encoded with a sub-hologram comprising a plurality of sub-hologram components which formed in an area spanning a plurality of replicas, such as the first example image point;
Figure 12 is a flow diagram of a method of calculating a sub-hologram of an image point according to the disclosure; and
Figure 13 shows the removal of elongation error in a formed image point.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

### Optical configuration

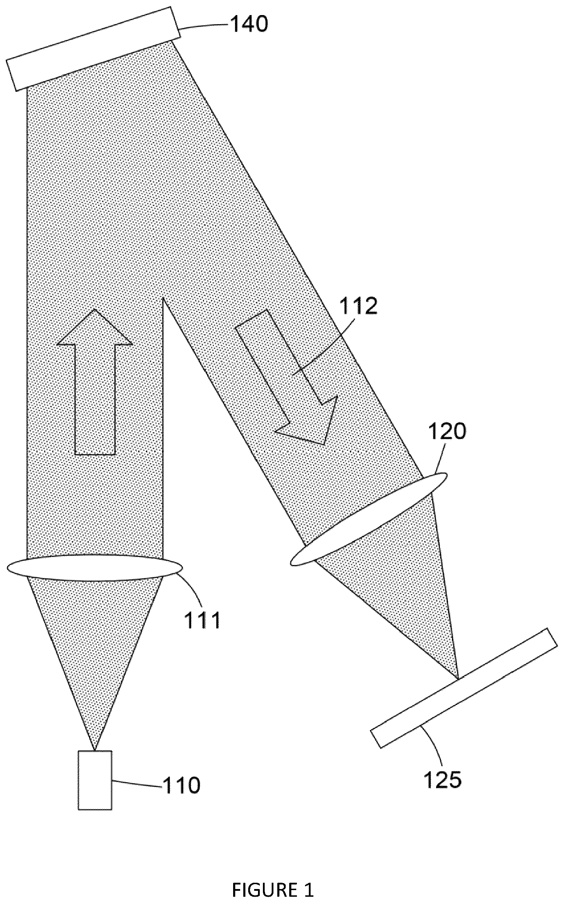

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

### Hologram calculation

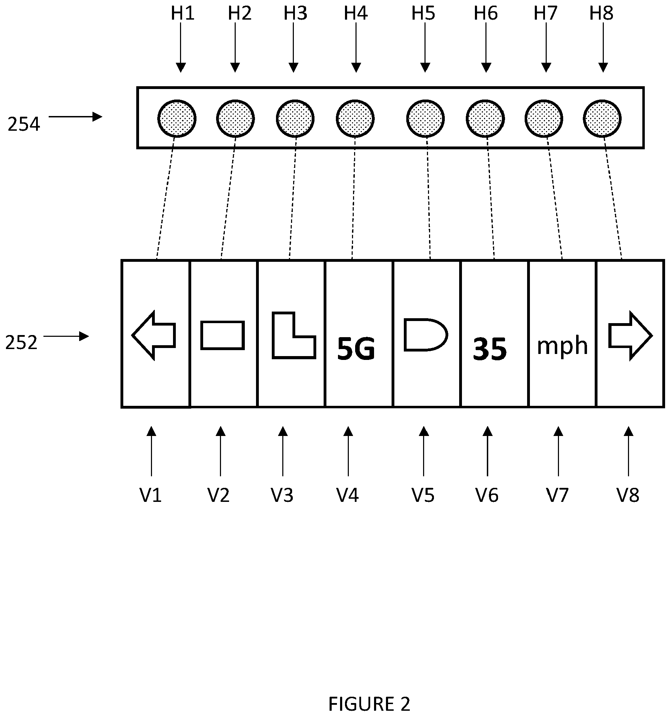

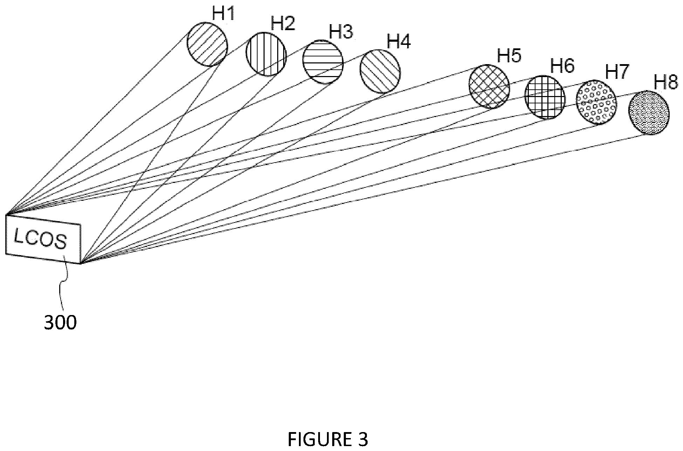

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, embodiments relate to holograms calculated based on point cloud methods. British patent application GB 2112213.0 filed 26 August 2021, incorporated herein by reference, discloses example hologram calculation methods that may be combined with the present disclosure. In particular, the earlier patent application describes methods for calculating a (special) type of hologram, described below with reference to Figures 2 and 3, that angularly divides/channels the image content.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Light modulation

The display system comprises a display device defining the exit pupil of the display system. The display device is a spatial light modulator. The spatial light modulation may be a phase modulator. The display device may be a liquid crystal on silicon, "LCOS", spatial light modulator as well known in the art. A LCOS SLM comprises a plurality of pixels, such as an array of quadrilateral shaped LC pixels. The pixels may be addressed or encoded with a diffractive pattern comprising a hologram. It may be said that the LCOS SLM is arranged "display" a hologram. The LCOS SLM is arranged to be illuminated with light, and to output spatially modulated light in accordance with the hologram. The spatially modulated light output by the LCOS SLM comprises a diffracted or holographic light field as described herein.

### Light channelling

The optical system disclosed herein is applicable to pupil expansion with any diffracted light field. In some embodiments, the diffracted light field is a holographic light field - that is, a complex light field that has been spatially modulated in accordance with a hologram of an image, not the image itself. In some embodiments, the hologram is a special type of hologram that angularly divides/channels the image content. This type of hologram is described further herein merely as an example of a diffracted light field that is compatible with the present disclosure. Other types of hologram may be used in conjunction with the display systems and light engines disclosed herein.

A display system and method are described herebelow, which comprise a waveguide pupil expander. As will be familiar to the skilled reader, the waveguide may be configured as a 'pupil expander' because it can be used to increase the area over (or, within) which the light emitted by a relatively small light emitter - such as a relatively small SLM or other pixelated display device as used in the arrangements described herein - can be viewed by a human viewer or other viewing system that is located at a distance, such as a relatively large distance, away from the light emitter. The waveguide achieves this by increasing the number of transmission points from which the light is output, towards the viewer. As a result, the light may be seen from a plurality of different viewer locations and, for example, the viewer may be able to move their head, and therefore their line of sight, whilst still being able to see the light from the light emitter. Thus, it can be said that the viewer's 'eye-box' or 'eye-motion box' is enlarged, through use of a waveguide pupil expander. This has many useful applications, for example but not limited to head-up displays, for example but not limited to automotive head-up displays.

A display system as described herein may be configured to guide light, such as a diffracted light field, through a waveguide pupil expander in order to provide pupil expansion in at least one dimension, for example in two dimensions. The diffracted light field may comprise light output by a spatial light modulator (SLM), such as an LCOS SLM. For example, that diffracted light field may comprise light that is encoded by a hologram displayed by the SLM. For example, that diffracted light field may comprise light of a holographically reconstructed image, corresponding to a hologram displayed by the SL M. The hologram may comprise a computer-generated hologram (CGH) such as, but not limited to, a point-cloud hologram, a Fresnel hologram, or a Fourier hologram. The hologram may be referred to as being a 'diffractive structure' or a `modulation pattern'. The SLM or other display device may be arranged to display a diffractive pattern (or, modulation pattern) that comprises the hologram and one or more other elements such as a software lens or diffraction grating, in a manner that will be familiar to the skilled reader.

The hologram may be calculated to provide channelling of the diffracted light field. This is described in detail in each of GB2101666.2, GB2101667.0, and GB2112213.0, all of which are incorporated by reference herein. In general terms, the hologram may be calculated to correspond to an image that is to be holographically reconstructed. That image, to which the hologram corresponds, may be referred to as an 'input image' or a 'target image'. The hologram may be calculated so that, when it is displayed on an SLM and suitably illuminated, it forms a light field (output by the SLM) that comprises a cone of spatially modulated light. In some embodiments the cone comprises a plurality of continuous light channels of spatially modulated light that correspond with respective continuous regions of the image. However, the present disclosure is not limited to a hologram of this type.

Although we refer to a 'hologram' or to a 'computer-generated hologram (CGH)' herein, it will be appreciated that an SLM may be configured to dynamically display a plurality of different holograms in succession or according to a sequence. The systems and methods described herein are applicable to the dynamic display of a plurality of different holograms.

Figures 2 and 3 show an example of a type of hologram that may be displayed on a display device such as an SLM, which can be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of the entrance pupil of the viewing system.

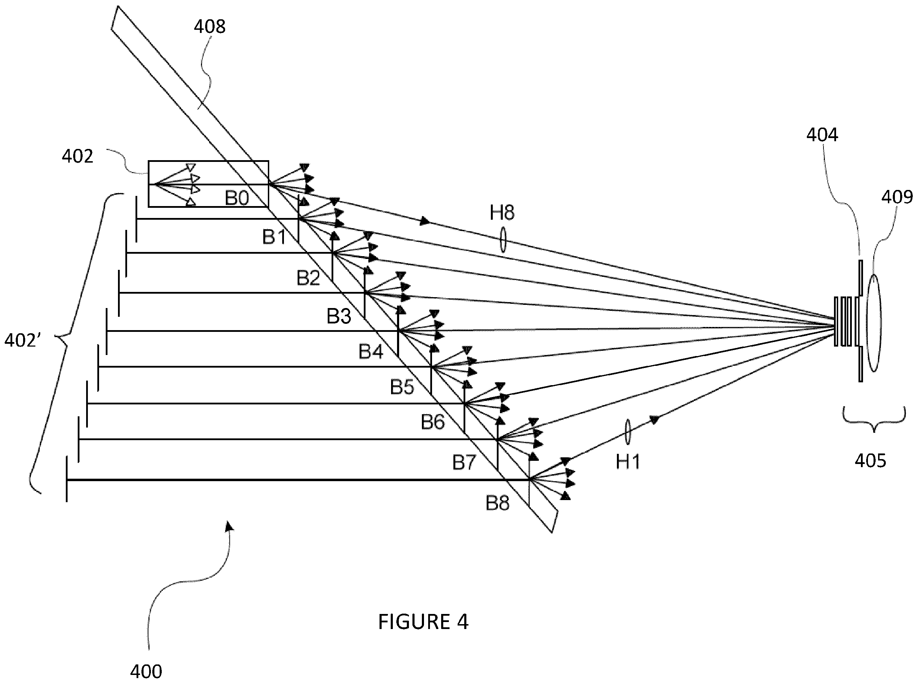

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or `diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

The methods and arrangements described above can be implemented in a variety of different applications and viewing systems. For example, they may be implemented in a head-up-display (HUD) or in a head or helmet mounted device (HMD) such as an Augmented Reality (AR) HMD.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

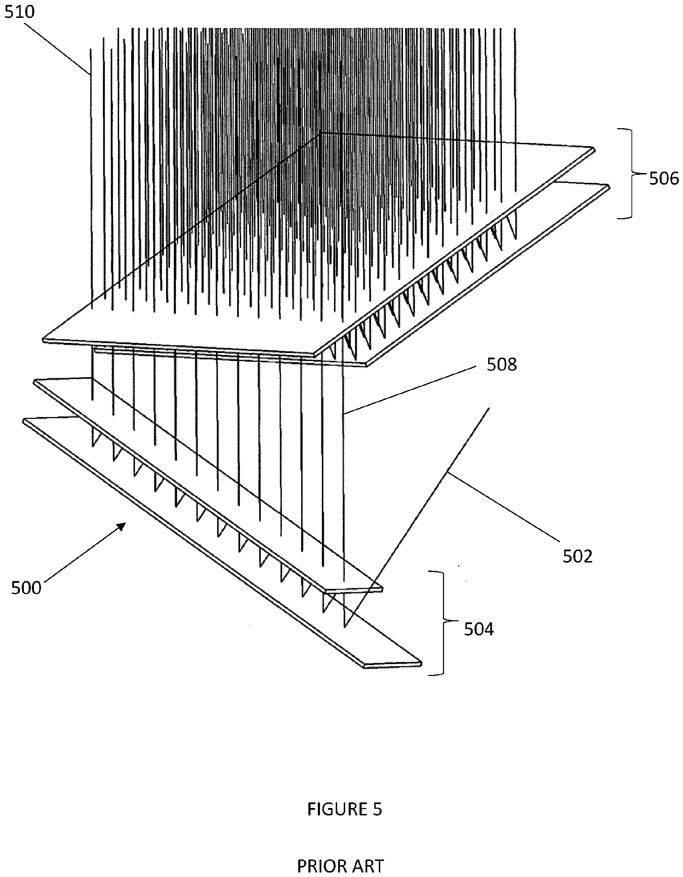

Figure 5 shows a perspective view of a system 500 comprising two replicators, 504, 506 arranged for expanding a light beam 502 in two dimensions.

In the system 500 of Figure 5, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The light beam 502 is directed towards an input on the first replicator 504. Due to a process of internal reflection between the two surfaces, and partial transmission of light from each of a plurality of output points on one of the surfaces (the upper surface, as shown in Figure 5), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5 combine to provide a two-dimensional replicator (or, "two-dimensional pupil expander").

### Virtual replicas of the display device formed by the waveguide or waveguides

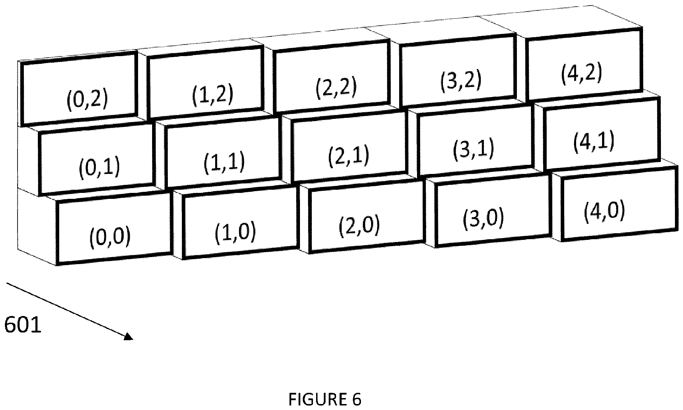

Figure 6 shows an example visualisation of an "extended modulator" or "virtual surface" comprising a 3D array including a hologram formed on a display device and a plurality of replicas of the hologram formed by a waveguide.

As noted above with reference to Figure 4, a one-dimensional waveguide 408 may be arranged to expand the exit pupil of a display system. The display system comprises a display device 402 displaying a hologram, which is output at "bounce" point B0 of waveguide 408. In addition, the waveguide forms a plurality of replicas of the hologram, at respective "bounce" points B1 to B8 along its length, corresponding to the direction of pupil expansion. As shown in Figure 4, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

The proposed method of calculating a hologram defines a so-called "extended modulator", in which the display device (e.g. LCOS SLM) is "extended" by an array of virtual replicas thereof, which would be formed by one or more waveguide pupil expanders, to form an "extended modulator" or "virtual surface" (e.g. as shown in Figure 4). For example, the display device (e.g. LCOS SLM) may be located at position (0, 0) of the extended modulator shown in Figure 6, and (virtual) replicas (i.e. replica display devices) that would be formed by two one-dimensional pupil expanders are located at positions extending to (0,2) in a first direction of pupil expansion and (4, 0) in a second direction of pupil expansion. The direction of the optical path is shown by arrow 601, which is perpendicular to the first and second directions of pupil expansion.

Accordingly, an extended modulator is defined comprising: (i) a first offset between replicas generated in a first waveguide pupil expander (e.g. an elongate waveguide) defined by an angle (in space) and corresponding direction of pupil expansion, (ii) a second offset between replicas generated in a second waveguide pupil expander (e.g. planar waveguide) defined by an angle (in space) and corresponding direction of pupil expansion; (iii) any skew between the direction of the first offset and the second offset - creating the general parallelogram shape in Figure 6, and (iv) the optical path length (difference) between display device replicas and the eye position - in the direction 601 shown in Figure 6.

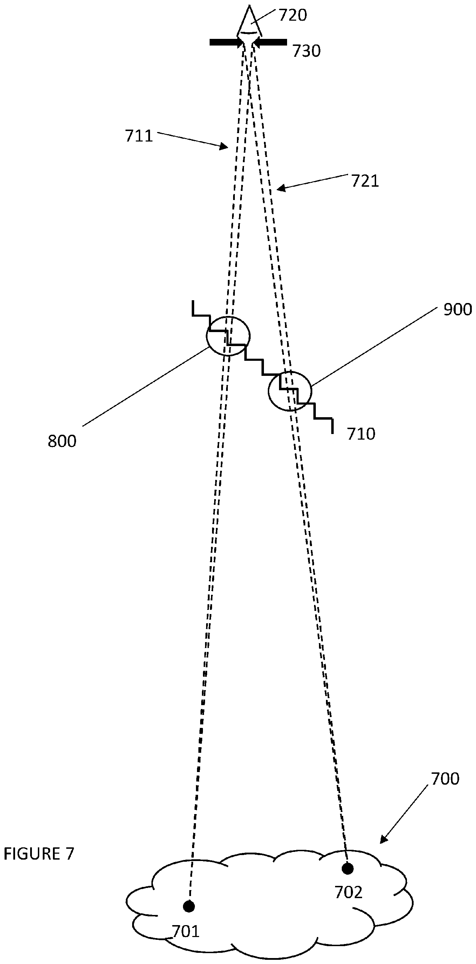

Figure 7 shows an arrangement for calculating a point cloud hologram using an extended modulator, such as the extended modulator shown in Figure 6, in accordance with the present disclosure.

The arrangement comprises a virtual image 700 at a desired virtual image position in space, and a viewing system comprising an eye 720 having a pupil forming an entrance aperture 730 of the viewing system. The arrangement shows one position of the eye 720 within the eye-box. Thus, the point cloud hologram is associated with a particular eye-box position. In addition, the arrangement comprises an extended modulator (or virtual surface) 710 positioned between the virtual image 700 and the eye 720. As the skilled person will appreciate, in Figure 7, the optical path is effectively "unfolded" within the waveguide.

In accordance with conventional techniques for calculating a point hologram well known in the art, spherical waves (or 'wavelets') are propagated along a path from each virtual image point to the plane of a display device. The point cloud hologram is determined based on (e.g. by combining/superimposing) the complex light pattern (i.e. a complex light field having an amplitude and phase distribution) formed by the wavelets propagating from each virtual image point at its respective area of intersection with the plane of the display device. It may be said that the complex light pattern of the wavelets associated with each virtual image point is "captured" at the corresponding area of intersection with the plane of the display device.

However, in accordance with the present disclosure, the point cloud hologram is determined based on (e.g. by combining/superimposing) the complex light pattern (i.e. amplitude and or phase distribution) formed by the wavelet propagating from each virtual image point at its respective area of intersection with the extended modulator or virtual surface. Moreover, only the parts of the wavelets propagating from the virtual image points that reach the viewer's eye are considered.

Figure 7 shows first and second example virtual image points 701, 702 of a virtual image 700 positioned at a desired distance from a viewer's eye 720. As shown by dashed lines, (expanding) spherical waves or wavelets are propagated from each example virtual image point 701, 702 through the extended modulator 710 to the entrance aperture 730 of the viewer's eye 720. A first pair of straight lines 711 extend from first virtual image point 701 to opposite extreme positions of the entrance aperture 730 (i.e. left and right hand sides in the drawing) representing the edges/perimeter of (the relevant part of) the associated wavelet. Similarly, a second pair of straight lines 721 extend from second virtual image point 702 to opposite extreme positions/edges of the entrance aperture 730 (i.e. left and right hand sides in the drawing) representing the edges/perimeter of (the relevant part of) the associated wavelet. The first and second pairs of straight lines 711, 721 have respective areas of intersection 800, 900 with the extended modulator 710 (or virtual surface). Thus, the first and second pairs of straight lines 711, 721 "delineate" (i.e. form a boundary around) the desired (part of the) wavelet, in accordance with this disclosure, associated with the first and second virtual image points 701, 702, respectively, that can pass through the entrance aperture 730 (i.e. pupil) of the viewer's eye 720 at the particular eye-box position. In the following description, references to the `wavelet' propagating from a virtual image point relate to the part of the propagating wave that is delineated by straight lines, as described above.

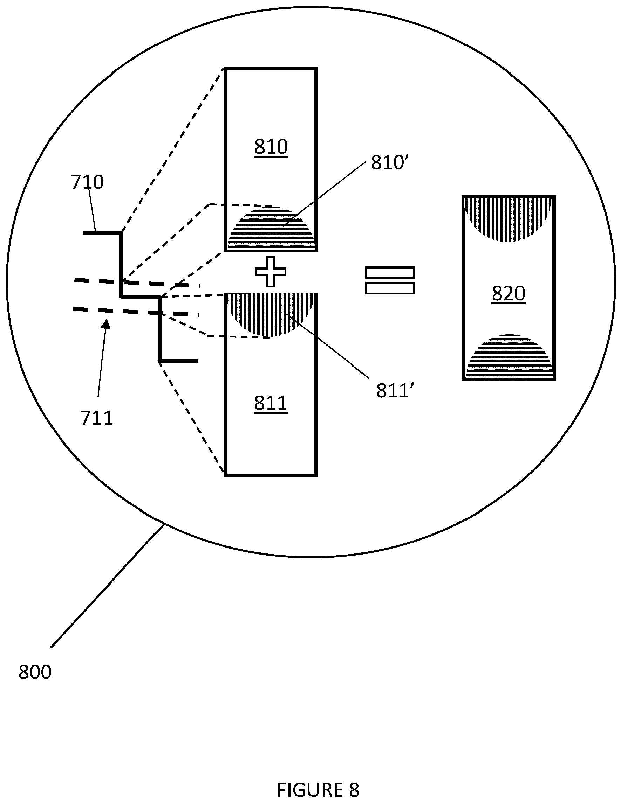

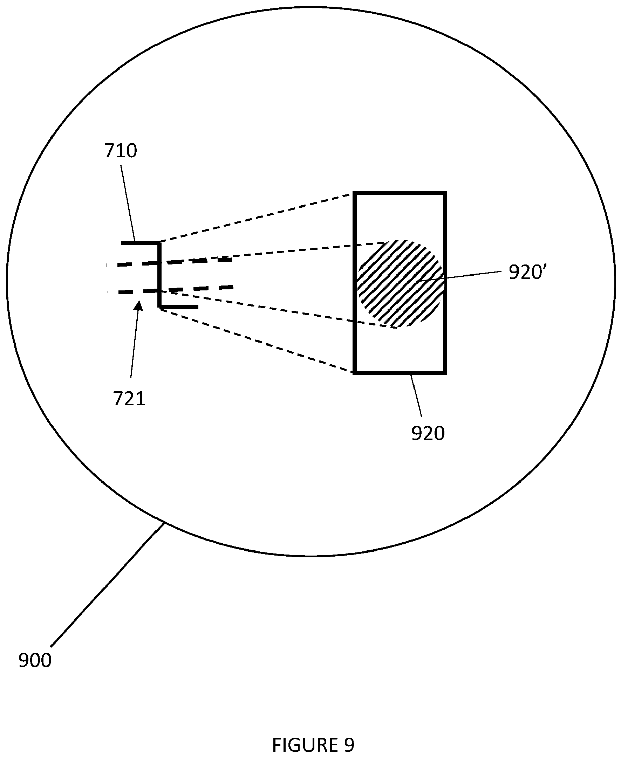

Since the extended modulator is "staggered", as described herein, the area of intersection of the wavelet propagating from each virtual image point is at different perpendicular distance (to the plane of the display device) - or different distance in the propagation direction. In particular, the wavelets propagating from different virtual image points pass thought different "replicas" (of the display device) of the extended modulator 710. Some wavelets - e.g. the one associated with virtual image point 701 - may intersection a plurality of replicas, whilst other wavelets - e.g. the one associated with virtual image point 702 - intersection only a single replica, as described further below. For example, Figure 7 shows a first area of intersection 800 with the extended modulator 710 of a first wavelet, delineated/bounded by first pair of lines 711, propagating from first virtual image point 701 to the eye 720. Similarly, Figure 7 shows a second area of intersection 900 with the extended modulator 710 of a second wavelet, delineated/bounded by the second pair of lines 721, propagating from second virtual image point 702 to the eye 720. These areas of intersection are described below with reference to Figures 8 and 9.

Figure 8 shows the first area of intersection 800 with extended modulator 710 of the first wavelet, delineated by the first pair of lines 711, propagating from first virtual image point 701 in more detail. In particular, the first wavelet intersects in an area comprising two adjacent virtual replicas of the extended modulator 710 - these virtual replicas are shown as horizontal lines in Figure 7 and vertical lines in Figure 8. As noted above, different virtual replicas of the extended modulator are in different planes at different perpendicular distances. Accordingly, the complex light pattern at an area of intersection with each virtual replica of the extended modulator is determined separately. This is necessary because the parts of the wavelet intersecting the two adjacent virtual replicas will have propagated different distances from the virtual image point 791 and so have different complex light patterns or wavefronts on arrival at the extended modulator.

Reference is made in the following to a "complex light pattern" to refer to a spatial distribution of pairs of amplitude and phase values representative of the light field that arrives at the extended modulator from each virtual image point. In other words, the "complex light pattern" corresponds to the wavefront of the wavelet at the point or points it intersections the extended modulator. In embodiments, the "complex light pattern" is an array of pairs of amplitude and phase values. In some embodiments, the display device is a phase modulator in which case amplitude values may ultimately be ignored or discarded. The "complex light pattern" may also be referred to as a "complex light field".

Accordingly, Figure 8 shows a first complex light pattern 810' formed by the wavelet at the intersection with a first virtual replica of the extended modulator 710 (shown at the top of the drawing). The first complex light pattern 810' is "captured" at the plane of the first virtual replica and forms a first sub-hologram component 810 associated with first virtual image point 701. In addition, Figure 8 shows a second complex light pattern 811' formed by the wavelet at the intersection with a second virtual replica of the extended modulator 710 (shown at the bottom of the drawing). The second complex light pattern 811' is "captured" at the plane of the second virtual replica and forms second sub-hologram component 811 associated with first virtual image point 701. Notably, the area of intersection at each of the first and second virtual replicas of the extended modulator 710 is shown as (a part of) a circle or ellipse. This corresponds to a "primary contributory area" because it corresponds to light rays that pass through the entrance pupil of the viewing system. In some cases, this ensures that a primary image (and not "ghost image") is formed by the viewing system. In some embodiments, the shape of the primary contributory area corresponds to (e.g. has the same general shape but not necessarily the same size as) that of the entrance pupil of the viewing system. Since the complex light patterns 810', 811' formed by the wavelet are positioned at the edges of the respective virtual replicas, the primary contributory area is at the top and bottom edges of the sub-hologram 820 of virtual image point 701.

Figure 8 shows that the first sub-hologram component 810 and the second sub-hologram component 811 are combined - in particular superimposed - to form a sub-hologram 820 associated with first virtual image point 701. In particular, spatial information (on the display device) associated with each complex light pattern 810', 811' is retained in the step of superimposing. That is, first complex light pattern 810' is formed at a position corresponding to a lower region of the display device and so appears at the corresponding lower region of the final sub-hologram 820 of this virtual image point 701. Likewise, second complex light pattern 811' is formed at a position corresponding to an upper region of the display device and so appears at the corresponding upper region of the final sub-hologram 820 of this virtual image point 701.

Figure 9 shows an area of intersection 900 with extended modulator 710 of the second wavelet, delineated by the second pair of lines 721, propagating from second virtual image point 702 in more detail. In particular, the wavelet intersects in an area of a single virtual replica of the extended modulator 710 - this virtual replica is shown as a horizontal line in Figure 7 and a vertical line in Figure 9. Accordingly, the complex light pattern 920' at the area of intersection at the (single) plane of the virtual replica of the extended modulator 710 is captured and forms a sub-hologram 920 associated with second virtual image point 702. Once again, the area of intersection at the virtual replica of the extended modulator 710 is shown as a circle or ellipse. This corresponds to a "primary contributory area" for the second virtual image point 702. Since the complex light pattern formed by the wavelet is positioned at the centre of the virtual replica, the primary contributory area is at the centre of the sub-hologram 920 for this virtual image point 702.

A point cloud hologram is determined for the entire virtual image 700 by combining/superimposing (e.g. by vector addition) the sub-holograms e.g. 820, 920 associated with each virtual image point e.g. 701, 702 of the virtual image 700.

Since the improved method of calculation of the point cloud hologram uses an extended modulator, it automatically takes into account the differences in (i) first offsets between replicas in a first dimension, (ii) second offsets between replicas in a second dimension and (iii) any skew between replicas generated by one or more waveguide pupil expanders, as well as (iv) optical path length differences between replicas to the eye position, as described above.

Furthermore, the improved method of calculation of the point cloud hologram only takes into account wavelets/light rays from the virtual image that can pass through the entrance pupil of the viewer's eye at the relevant eye position. Thus, only light rays that contribute to the "main image" (and not ghost image) are considered - i.e. the primary contributory areas at the intersection of the wavelets with the extended modulator. In consequence, the improved method automatically avoids the undesirable formation of "ghost images", as described above. Furthermore, since the method only propagates wavelets/light rays from the virtual image that can pass through the entrance pupil of the viewer's eye at the relevant eye position, the computational complexity is reduced. In this way, the speed of calculating the point cloud hologram is reduced, as is the consumption of computational resources.

### Correction of elongated virtual image points

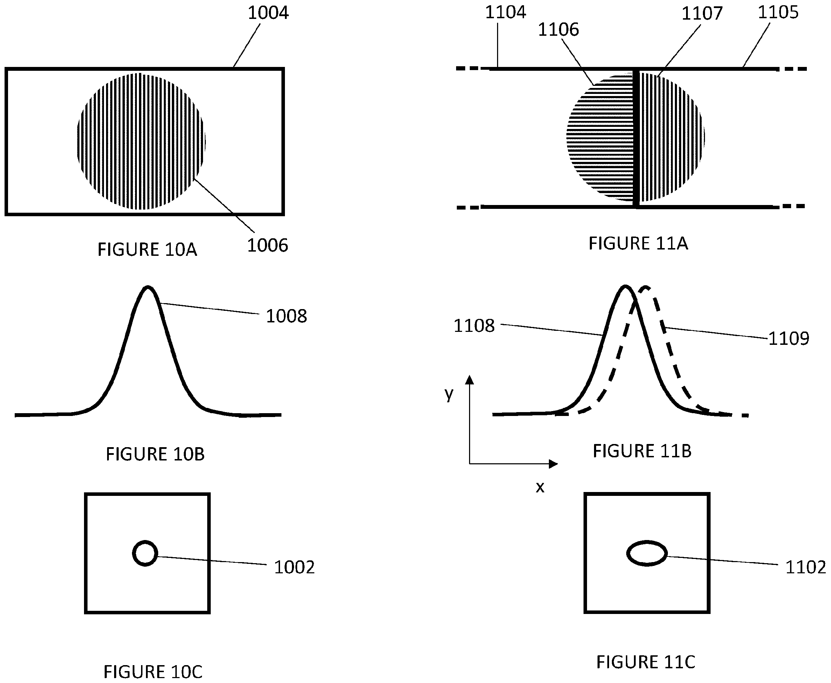

Thus far, a method for calculating a hologram of a virtual image point for an optical system comprising a waveguide has been described. After testing the quality and clarity of images formed by the holograms calculated in accordance with this method, the inventors have unexpectedly found that, even after accounting for the offset and skew between replicas, the image points that are actually formed when light is encoded with the calculated hologram appear elongated relative to the original virtual image point which the sub-hologram is calculated based on. This is the case for image points that are formed by a sub-hologram comprising more than one sub-hologram component and with an intersection spanning multiple replicas. The elongated image points adversely affect the quality and clarity of images formed by holograms calculated in accordance with the above method. The elongation of the actual image points is described in more detail in relation to Figures 10A to 10C and 11A to 11C.

Figures 10A to 10C relate to an actual image point 1002 formed when light is encoded with the sub-hologram comprising sub-hologram component 920 (described above). When light from a display device displaying the sub-hologram 920 is encoded with the hologram and passes through a waveguide, a plurality of replicas of the hologram are generated, i.e. an "extended modulator" similar to that shown in Figure 6 and 7 is formed. The corresponding complex light field 1006 that forms image point 1002 falls within a single replica 1004 of the display device. In other words, Figures 10A to 10C show an actual image point 1002 that corresponds to the virtual image point 702 of Figure 7. Figure 10A shows the complex light field 1006 within the single replica 1004. Figure 10B shows a main lobe 1008 of a point-spread function associated with complex light field 1006. Figure 10C shows the resulting actual image point 1002 resulting from the point-spread function 1008. A single point-spread function comprising a single main lobe 1008 contributes to the actual image point 1002. The actual image point 1002 appears to be circular (i.e. is not elongated) and so has the same shape as the virtual image point 702 which is also circular.

Figures 11A to 11C relate to an actual image point 1102 formed when light is encoded with the sub-hologram 820 comprising first and second sub-hologram components 810,811 (described above). The actual image point 1102 comprises first and second complex light fields 1106, 1107. These first and second complex light fields 1106,1107 are formed are formed within respective adjacent first and second virtual replicas 1104, 1105. Figure 11A shows the complex light field 1106 within the first replica 1104 and complex light field 1107 within the second replica 1105. Although only two replicas are shown in Figure 11A, in some examples, the extended modulator comprises more than two replicas which may form a one or two dimensional array, as described above and the complex light field may intersection more than two replicas. Only the portions of first and second replicas 1104, 1105 of Figure 11A comprising first and second complex light fields 1106,1107 are shown in Figure 11A.Figures 11A to 11C represent an actual image point 1102, observed by the inventors, that corresponds to the virtual image point 701 of Figure 7. The reconstructed image point 1102 is elongated whereas the virtual image point 702 is circular.

Figure 11B shows the main lobe 1108 of a first point-spread function (unbroken line) corresponding to the complex light field 1106 and the main lobe 1109 of a second point-spread function (broken line corresponding to the complex light field 1107. The main lobes 1108, 1109 of the first and second point-spread functions partially overlap, but the peaks are spatially separated. In other words, the two main lobes 1108, 1109 are not co-localized and the result is that the combined complex light field that forms the reconstructed image point 1102 comprises two non-co-localised point-spread functions. This is different to the single lobe 1008 of Figure 10B which comprises a single point-spread function with a single peak / main lobe 1008. Figure 11C shows the resulting actual image point 1102 from the two point-spread functions of Figure 11B. Because the two main lobes 1108, 1109 are not spatially co-localized, the resultant actual image point 1102 has an elongated circular shape (i.e. oval shape). The elongation of the actual image point has the effect of reducing the quality and clarity of an overall image formed that comprise the actual image point 1102.

The inventors were surprised by the finding that the reconstructed image point 1102 has a shape that is elongated relative to the virtual image point that was used for the sub-hologram calculation. Because the method described in relation to Figures 6 to 9 takes into account offsets between replicas, skew of replicas and optical path length differences of replicas, it was expected that the combined complex light fields 1106, 1107 of Figure 11A would be equivalent and identical to the single complex light field 1006 of Figure 10A. It was expected that (effectively) a single point-spread function with a single main lobe would be generated. But the inventors' simulation and experimentation showed that this is not the case (e.g. Figures 11B and 11 C). The inventors identified that the spatial separation of the main lobes 1108, 1109 is caused by diffraction-type effects at the boundary between the replicas that form the extend modulator / virtual surface. This diffraction causes displacement / shift of the main lobes 1108, 1109. In particular, the main lobe 1108 of the first point-spread function is shifted in a negative x direction and the main lobe 1109 of the second point-spread function is shifted in a positive x direction. The inventors have found that, by applying an appropriate local phase-ramp function to at least one of the first area component and second area component, the shift of the first and second point-spread functions can be compensated such that the main lobes 1108, 1109 are aligned. Aligning the main lobes 1108, 1109 means that the main lobes 1108, 1109 become co-localised such that the combined first and second point-spread functions resemble the points spread function of Figure 10B. In other words, the actual image point that is formed by the combined main lobes 1108, 1109 is substantially circular rather than elongated and so has the same shape as the associated virtual image point that the hologram is calculated to form. This adversely affects the quality of the formed holograms / images. Furthermore, this reduces the resolution of the display as fewer pixels per unit area can be shown which is undesirable.

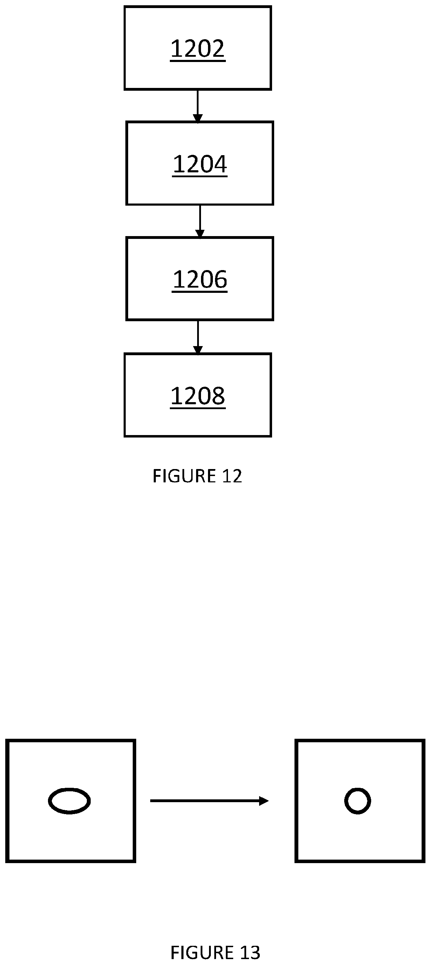

Figure 12 shows a flow diagram representing a method of calculating a sub-hologram for a virtual image point (such as virtual image point 701) in which elongation of the virtual image point is substantially eliminated, according to the disclosure.

Step 1202 of the method comprises determining an area delimited by straight line paths from the virtual image point to the perimeter of an entrance pupil of a viewer, wherein the area comprises a first area component on a first virtual replica of the display device and a second area component on a second virtual replica of the display device. In the context of Figure 11, the first area component Step 1204 of the method comprises determining a first sub-hologram component of the virtual image point within the first area component and a second sub-hologram component of the virtual image point within the second area component. Step 1206 of the method comprises superimposing the first sub-hologram component and second sub-hologram component to form a sub-hologram of the virtual image point. Steps 1202 to 1206 correspond to the method described above with respect to virtual image point 701 (see Figure 7 and 8).

Step 1208 of the method comprises applying a first local phase-ramp function to the first area component and a second local phase-ramp function to the second area component. Each of the phase-ramp functions may be referred to as a grating function. The step of applying the first local-phase ramp comprises superimposing (e.g. adding) the first local phase-ramp function with the calculated first sub-hologram component. The step of applying the second local-phase ramp comprises superimposing (e.g. adding) the second local phase-ramp function with the calculated second sub-hologram component.

By superimposing local phase-ramp functions onto sub-hologram components, light encoded with the respective sub-hologram component (and the phase-ramp function) can be steered in an opposite direction to the displacement caused by the diffraction at the boundary between replicas. By applying different phase-ramp functions in different local areas (in particular, on to different sub-holograms components), light encoded with different sub-hologram components can be steered in different directions. Knowing / estimating the displacement of the light caused by diffraction effects allows for appropriate local phase-ramp functions to be chosen to align / co-localise point-spread functions emitted from different sub-hologram components. Thus, steering using at least one local phase-ramp function as described herein can advantageously be used to substantially eliminate the elongation effect.

Step 1208 will now be described in the context of the sub-hologram shown in Figure 8 and the point-spread functions shown in Figure 11B.

Previously, it was described how the first complex light pattern 810' captured at the plane of the first replica forms a first sub-hologram component 810. When step 1208 of the method is performed, forming the first sub-hologram component 810 additionally comprises superimposing a first local phase-ramp function with the first complex light pattern 810'. The first local phase-ramp function is chosen so as to steer light encoded with the first sub-hologram component such that the main lobe 1108 of the first point-spread function is shifted in e.g. the positive x direction. This shift of the main lobe 1108 is designed to reverse the displacement in the negative x direction occurring at the interface between replicas. Similarly, forming the second sub-hologram component 811 additionally comprises superimposing a second local phase-ramp function with the second complex light pattern 811'. The second local phase-ramp function is chosen so as to steer light encoded with the second sub-hologram component such that the main lobe 1109 of the second point-spread function is shifted in the negative x direction. This shift of the main lobe 1109 is designed to reverse the displacement in the positive x direction caused at the replica boundary. The combination of the first and second local phase-ramp functions causes alignment of the main lobes 1108, 1109. The result is the first and second point-spread functions of Figure 11B are steered to resemble the single point-spread function of Figure 10B such that actual image points generated by the shifted main lobes 1108, 1109 are not elongated and better represent the virtual image points for which the sub-hologram is calculated (i.e. are spherical).

Figure 13 represents the effect of applying step 1208 of the method. Image point 1302 is an actual image point without step 1208 of the method being applied and so is elongated. Image 1304 is an actual image point with step 1208 of the method being applied and so is not elongated and accurately represents the (circular) virtual image point that the hologram was calculated to represent.

In some embodiments, the first and second local phase-ramp functions are selected based on a parameter of the respective area component on the respective replica. In some embodiments, the parameter includes at least one of the following: a distance of a center of at least a portion of the respective area component from an edge of the respective replica; the size of the respective area component; the size of the respective sub-hologram component; a ratio of the size of the area component for which the phase-ramp is being selected to the other of the first or second area components and / or a ratio of the size of the sub-hologram component for which the phase-ramp is being selected to the other of first or second sub-hologram components. The person skilled in the art will appreciate how parameters of the local phase-ramp function (e.g. gradient, shape and/or size) may be determined by any number of different methods including simple trial and error. The present disclosure is not therefore limited in any respect to the parameters of the phase-ramp function or method of determining the same. The amount of shift of a point-spread function formed by a sub-hologram component depends on the relative size of the sub-hologram component / area component. So, each of the parameters can be used as a proxy for the amount of shift of a point-spread function that is required.

In the example shown in Figure 11, the first area component and the second area component (and the first and second complex light fields 1106 and 1107) are equal in size. So, each of the parameters above is equal for both of the first and second area components. In this way, an equal but opposite shift in the main lobes 1108, 1009 causes the lobes to be co-localised. The first and second local phase-ramp functions may be described as symmetrical in this example. In other examples, the first area component can be different in size and distance from the edge of the respective area to the second area component. As such, the phase-ramp function selected for the first area component will be different in magnitude than the phase-ramp function selected for the second area component. In other words, the phase-ramp functions applied to the first and second area component can be described as asymmetric.

In some examples, the step of selecting a phase-ramp function for at least one of the first area component and second area components comprises looking up the parameter of the respective sub-hologram component in a look-up table or database. The look-up table or database comprises data pairs or key-value pairs. The data pairs or key-value pairs relate values for the parameter with appropriate phase-ramp functions. The look-up table or database comprises gradient values for phase-ramp functions. The step of selecting a phase ramp function for the first area component and second area component comprises inputting the parameter into the look-up table or database. A local phase-ramp function is then output. This is applied each time a sub-hologram component is calculated.

### Additional features

In embodiments, the holographic reconstruction is colour. In some embodiments, an approach known as spatially-separated colours, "SSC", is used to provide colour holographic reconstruction. In other embodiments, an approach known as frame sequential colour, "FSC", is used.

Examples describe illuminating the SLM with visible light but the skilled person will understand that the light sources and SLM may equally be used to direct infrared or ultraviolet light, for example, as disclosed herein. For example, the skilled person will be aware of techniques for converting infrared and ultraviolet light into visible light for the purpose of providing the information to a user. For example, the present disclosure extends to using phosphors and/or quantum dot technology for this purpose.

Some arrangements describe 2D holographic reconstructions by way of example only. In other arrangements, the holographic reconstruction is a 3D holographic reconstruction. That is, in some arrangements, each computer-generated hologram forms a 3D holographic reconstruction.

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A method of calculating a sub-hologram of a virtual image point for an optical system comprising a display device arranged to display the sub-hologram and a waveguide arranged to replicate the sub-hologram, wherein the method comprises:
determining an area delimited by straight line paths from the virtual image point to the perimeter of an entrance pupil of a viewer, wherein the area comprises a first area component on a first virtual replica of the display device and a second area component on a second virtual replica of the display device;
determining a first sub-hologram component of the virtual image point within the first area component and a second sub-hologram component of the virtual image point within the second area component;
superimposing the first sub-hologram component and second sub-hologram component to form a sub-hologram of the virtual image point, wherein the method further comprises:
applying a local phase-ramp function to at least one of the first area component and second area component.

2. A method as claimed in claim 1 wherein a displacement associated with the local phase-ramp function aligns the point-spread functions formed by the respective sub-hologram components when illuminated.

3. A method as claimed in claim 1 or 2 comprising applying a first local phase-ramp function to the first area component and a second local phase-ramp function to the second area component, wherein the first local phase-ramp function and second local phase-ramp function are different.

4. A method as claimed in claim 3 wherein a first direction corresponding to the first local phase-ramp function is opposite to a second direction corresponding to the second local phase-ramp function.

5. A method as claimed in any of the preceding claims, wherein the step of applying a local phase-ramp function comprises selecting a phase-ramp function based on a parameter of the respective area component and / or related sub-hologram component.

6. A method as claimed in claim 5, wherein the parameter is at least one selected from the group comprising: a distance of a center of at least a portion of the respective area component from an edge of the respective replica; the size of the respective area component; the size of the respective sub-hologram component; a ratio of the size of the area component for which the phase-ramp is being selected to the other of the first or second area components; and / or a ratio of the size of the sub-hologram component for which the phase-ramp is being selected to the other of first or second sub-hologram components.

7. A method as claimed in claim 5 or 6, wherein the step of applying a local phase-ramp function comprises looking-up the parameter of the respective sub-hologram component in a look-up table or database comprising data pairs or key-value pairs relating values for the parameter with different phase-ramp functions.

8. A method as claimed in any of the preceding claims further comprising:
identifying a virtual surface between the virtual image and waveguide, wherein the virtual surface comprises the display device and a plurality of virtual replicas of the display device formed by the waveguide; and
identifying the area on the virtual surface.

9. A method as claimed in claim 8, wherein the virtual surface comprises the first virtual replica being adjacent to the second virtual replica, and optionally wherein the first sub-hologram component of the first virtual replica is adjacent to the second sub-hologram component of the second virtual replica.

10. A method as claimed in any preceding claim wherein each sub-hologram is a point cloud hologram determined by propagating a light wave from the corresponding virtual image point towards a viewer and determining the complex light field arriving at a corresponding position of the area, optionally, wherein the light wave is a spherical light wave.

11. A method as claimed in any preceding claim wherein each virtual replica of the display device formed by the waveguide is a different perpendicular distance from the display device such that a staggered virtual surface of virtual replicas of the display devices is formed.

12. A method as claimed in any preceding claim wherein each virtual replica of the display device corresponds to a respective replica of the hologram formed by the waveguide.

13. A method as claimed in any one of the preceding claims further comprising determining the position of each virtual replica of the display device by unfolding the optical path within the waveguide from the display device to the corresponding replica of the hologram formed by the waveguide.

14. A method of calculating a hologram of a virtual image for an optical system comprising a display device arranged to display the sub-hologram and a waveguide arranged to replicate the sub-hologram, the method comprising calculating a respective sub-hologram of each virtual image point of a plurality of virtual image points of the virtual image, wherein each sub-hologram is calculated in accordance with the method of any one of the preceding claims, and optionally further comprising superimposing the respective sub-holograms to form a hologram of the virtual image.

15. A method of calculating a sub-hologram of a virtual image point for an optical system comprising a display device arranged to display the sub-hologram and a waveguide arranged to replicate the sub-hologram, wherein the method comprises:
propagating a light wave from the respective virtual image point towards a viewer;
defining an area of intersection of the propagating light wave at a virtual surface between the virtual image and the viewer, wherein the virtual surface comprises the display device and at least a first virtual replica of the display and a second virtual replica of the display device, each of the virtual replicas being formed by the waveguide, wherein the defined area is bounded by straight line paths from the respective virtual image point to the perimeter of the entrance pupil of the viewer's eye;
identifying at least a first area component of the defined area of the light wave on the first virtual replica of the display device and a second area component of the defined area of the light wave on the second virtual replica of the display device; wherein each of the area components of the light wave forms a respective component of the sub-hologram; and
applying a local phase-ramp function to at least one of the first area component and second area component.
